# EUROPEAN PATENT APPLICATION

(11) **EP 4 554 054 A1**
(43) Date of publication of application: **14.05.2025**
(21) Application number: 23854940.6
(22) Date of filing: 18.08.2023
(51) Int. Cl.: H02K 1/274

(54) **MOTOR ROTOR AND METHOD FOR MANUFACTURING MOTOR ROTOR**

(30) Priority: 19.08.2022 JP 2022130863
(71) Applicant: IHI Corporation, Tokyo 135-8710 (JP)
(72) Inventor: OHASHI, Satoru, Tokyo 135-8710 (JP); MATSUYAMA, Yoshimitsu, Tokyo 135-8710 (JP); AKIYAMA, Masahiro, Tokyo 135-8710 (JP); FUJITA, Takafumi, Tokyo 135-8710 (JP); FURUNO, Akihisa, Tokyo 135-8710 (JP); KONNO, Taketo, Tokyo 135-8710 (JP)
(74) Representative: TBK
(86) International application number: PCT/JP2023/029846
(87) International publication number: WO 2024/038906

(57) **Abstract**

A motor rotor includes a shaft portion having a magnet, and a holding tube fitted onto an outer circumferential surface of the shaft portion. The shaft portion includes the magnet and a large-diameter portion having an outer diameter larger than an outer diameter of the magnet. An inner circumferential surface of the holding tube abuts on an outer circumferential surface of the magnet and an outer circumferential surface of the large-diameter portion.

## Description

### Technical Field

The present disclosure relates to a motor rotor and a method for manufacturing the motor rotor.

### Background Art

In a motor rotor including a magnet, a holding tube is fitted onto the outside of the magnet so that the magnet can withstand centrifugal force. The holding tube is fixed to a shaft by being shrink fitted onto an outer circumferential surface of a sleeve provided adjacent to the magnet. Such a motor rotor including the holding tube is described in Patent Literature 1, for example.

### Citation List

### Patent Literature

Patent Literature 1: Japanese Patent No. 5359062

### Summary of Invention

### Technical Problem

In the motor rotor described above, when the holding tube in a high-temperature state abuts on the magnet in the shrink fitting of the holding tube, the magnet may be locally demagnetized at the abutting portion. Therefore, in the technical field, there is a demand for a motor rotor capable of suppressing local demagnetization of a magnet of a shaft portion when a holding tube is attached to the shaft portion by shrink fitting, and a method for manufacturing the motor rotor.

### Solution to Problem

A motor rotor according to one aspect of the present disclosure includes a shaft portion having a magnet, and a holding tube fitted onto an outer circumferential surface of the shaft portion. The shaft portion includes the magnet and a large-diameter portion having an outer diameter larger than an outer diameter of the magnet. The large-diameter portion is provided adjacent to the magnet in an extending direction of the shaft portion. An inner circumferential surface of the holding tube abuts on an outer circumferential surface of the magnet and an outer circumferential surface of the large-diameter portion.

### Effects of Invention

According to various aspects of the present disclosure, when the holding tube is attached to the shaft portion by shrink fitting, it is possible to suppress local demagnetization of the magnet of the shaft portion.

### Brief Description of Drawings

FIG. 1 is a cross-sectional view illustrating a motor rotor according to a first embodiment.
FIG. 2 is a flowchart illustrating a flow of a method for manufacturing the motor rotor.
FIG. 3 is a cross-sectional view illustrating a state in which a shaft portion is to be inserted into a heated holding tube.
FIG. 4(a) is a cross-sectional view illustrating a state in which the shaft portion is inserted into the heated holding tube. FIG. 4(b) is a cross-sectional view taken along line IVb-IVb in FIG. 4(a).
FIGS. 5(a) to 5(c) are cross-sectional views illustrating a state in which the holding tube is cooled to reduce the diameter thereof.
FIG. 6 is a cross-sectional view illustrating a motor rotor according to a second embodiment.
FIG. 7 is a cross-sectional view illustrating a state in which a shaft portion is to be inserted into a heated holding tube.
FIG. 8 is a graph illustrating an analysis result of a temperature change of the magnet in a case where the heated holding tube is attached to the shaft portion.

### Description of Embodiments

A motor rotor according to one aspect of the present disclosure includes a shaft portion having a magnet, and a holding tube fitted onto an outer circumferential surface of the shaft portion. The shaft portion includes the magnet and a large-diameter portion having an outer diameter larger than an outer diameter of the magnet. The large-diameter portion is provided adjacent to the magnet in an extending direction of the shaft portion. An inner circumferential surface of the holding tube abuts on an outer circumferential surface of the magnet and an outer circumferential surface of the large-diameter portion.

In this motor rotor, the outer diameter of the large-diameter portion is larger than the outer diameter of the magnet. Therefore, when the shaft portion is inserted inside the holding tube in order to attach the holding tube by shrink fitting, it is possible to suppress direct abutting of the inner circumferential surface of the holding tube on the magnet. As a result, it is possible to suppress direct abutting of the holding tube in a high-temperature state on the magnet in an initial stage of a cooling step of the holding tube in shrink fitting. Therefore, this motor rotor can suppress local demagnetization of the magnet of the shaft portion when the holding tube is attached to the shaft portion by shrink fitting.

In the motor rotor described above, the shaft portion may further include a shaft having a rod shape. The large-diameter portion may have a tubular shape. The large-diameter portion may be attached to the shaft such that the shaft passes through the large-diameter portion. The magnet may have a tubular shape. The shaft may pass through the magnet. In this case, even when the holding tube is attached by shrink fitting to the shaft portion having such a configuration, the motor rotor can suppress local demagnetization of the magnet.

In the motor rotor described above, the magnet may include a plurality of magnet bodies arranged side by side along a circumferential direction of the shaft or a plurality of magnet bodies arranged side by side along an extending direction of the shaft. In this case, the magnet including the plurality of magnet bodies can be used in the motor rotor, and restrictions on the shape of the magnet can be suppressed.

In the motor rotor described above, the shaft portion may further include a shaft having a rod shape. The large-diameter portion may have a columnar shape. The large-diameter portion may be attached to the shaft so as to be coaxial with the shaft. The magnet may have a columnar shape. The magnet may be disposed coaxially with the shaft. In this case, in the motor rotor having a configuration including a solid magnet, it is possible to suppress local demagnetization of the magnet when the holding tube is attached by shrink fitting.

In the motor rotor described above, the shaft and the large-diameter portion may be integrally formed. In this case, in the motor rotor, the number of components can be reduced. In addition, in this motor rotor, a step of attaching the large-diameter portion to the shaft can be omitted.

An outer diameter of a portion surrounding the large-diameter portion in the holding tube described above may be larger than an outer diameter of a portion surrounding the magnet in the holding tube. As a result, in the motor rotor, not only the large-diameter portion but also the magnet smaller than the outer diameter of the large-diameter portion can be sufficiently pressurized by the holding tube to hold the magnet.

Another aspect of the present disclosure is a method for manufacturing a motor rotor including a shaft portion and a holding tube, the shaft portion having a magnet, the holding tube being shrink fitted onto an outer circumferential surface of the shaft portion. The method for manufacturing the motor rotor includes: a step of preparing the shaft portion including the magnet and a large-diameter portion provided adjacent to the magnet in an extending direction of the shaft portion and having an outer diameter larger than an outer diameter of the magnet; a step of heating the holding tube to increase an inner diameter of the holding tube as compared with the inner diameter before heating; a step of inserting the shaft portion into the heated holding tube such that an outer circumferential surface of the large-diameter portion and an outer circumferential surface of the magnet face an inner circumferential surface of the holding tube; and a step of reducing the holding tube by cooling the holding tube while the shaft portion is inserted into the holding tube, thereby causing the inner circumferential surface of the holding tube to abut on the outer circumferential surface of the large-diameter portion and the outer circumferential surface of the magnet.

In this method for manufacturing the motor rotor, the shaft portion including the large-diameter portion having the outer diameter larger than the outer diameter of the magnet is prepared. Therefore, when the shaft portion is inserted inside the holding tube in order to attach the holding tube by shrink fitting, it is possible to suppress direct abutting of the inner circumferential surface of the holding tube on the magnet. As a result, it is possible to suppress direct abutting of the holding tube in a high-temperature state on the magnet in an initial stage of a cooling step of the holding tube in shrink fitting. Therefore, this method for manufacturing the motor rotor can suppress local demagnetization of the magnet of the shaft portion when the holding tube is attached to the shaft portion by shrink fitting.

Hereinafter, embodiments of the present disclosure will be described with reference to the drawings. Note that in the drawings, the same or corresponding elements are denoted by the same reference numerals, and redundant description will be omitted.

### (First Embodiment)

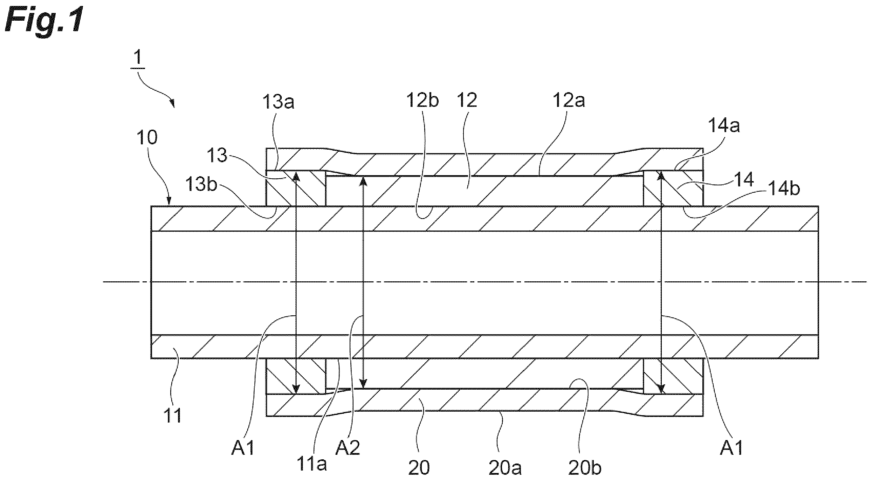

First, a first embodiment of a motor rotor will be described. A motor rotor 1 according to the first embodiment illustrated in FIG. 1 constitutes, for example, a rotor of an electric motor. The type of a motor in which the motor rotor 1 is used is not limited. The motor rotor 1 includes a shaft portion 10 having a magnet 12, and a holding tube 20 fitted onto an outer circumferential surface (an outer circumferential surface 12a of the magnet 12 and outer circumferential surfaces 13a and 14a of sleeves 13 and 14) of the shaft portion 10. In the present embodiment, the holding tube 20 is attached to the outer circumferential surface of the shaft portion 10 by shrink fitting.

The shaft portion 10 includes a shaft 11, the magnet 12, the sleeve (large-diameter portion) 13, and the sleeve (large-diameter portion) 14. The shaft 11 has a rod shape. In the present embodiment, the shaft 11 has a cylindrical shape. The magnet 12 has a tubular shape (cylindrical shape in the present embodiment). As the magnet 12, for example, various permanent magnets and the like are used.

The shaft 11 passes through the magnet 12. For example, the magnet 12 may be attached to an outer circumferential surface 11a of the shaft 11 by bonding an inner circumferential surface 12b of the magnet 12 to the outer circumferential surface 11a of the shaft 11 with an adhesive.

The sleeves 13 and 14 are provided adjacent to the magnet 12 in an extending direction of the shaft portion 10. In the present embodiment, the sleeve 13 is disposed on one end side of the magnet 12 in the extending direction of the shaft portion 10. The sleeve 14 is disposed on the other end side of the magnet 12 in the extending direction of the shaft portion 10. That is, the magnet 12 is disposed between the sleeve 13 and the sleeve 14 in the extending direction of the shaft portion 10. Note that the word "adjacent" does not indicate only a state in which no intervening object is included between the sleeves 13 and 14 and the magnet 12 as in the present embodiment. The word "adjacent" may include a state in which there is a thin intervening object such as an adhesive or a cushioning material between the sleeves 13 and 14 and the magnet 12.

Each of the sleeves 13 and 14 has a tubular shape (cylindrical shape in the present embodiment). The sleeves 13 and 14 are attached to the shaft 11 such that the shaft 11 passes through the sleeves. The sleeve 13 may be attached to the shaft 11 by, for example, fitting an inner circumferential surface 13b of the sleeve 13 onto the outer circumferential surface 11a of the shaft 11 by shrink fitting. Similarly, the sleeve 14 may be attached to the shaft 11 by, for example, fitting an inner circumferential surface 14b of the sleeve 14 onto the outer circumferential surface 11a of the shaft 11 by shrink fitting. Alternatively, the sleeves 13 and 14 may be attached to the outer circumferential surface 11a of the shaft 11 with screws or the like.

An outer diameter A1 of the sleeve 13 is larger than an outer diameter A2 of the magnet 12. The sleeve 14 has the same shape as the sleeve 13. Therefore, an outer diameter A1 of the sleeve 14 is larger than the outer diameter A2 of the magnet 12. Here, the size relationship in outer diameter between the sleeves 13 and 14 and the magnet 12 is satisfied when the motor rotor 1 is in a normal room temperature state. This normal room temperature state can be said to be a state in which a motor on which the motor rotor 1 is mounted is in a non-operating state and there is no temperature rise due to the operation. In addition, the normal room temperature state can be said to be a temperature state of the outside air temperature under the use environment of the motor on which the motor rotor 1 is mounted.

The holding tube 20 has a cylindrical shape. The holding tube 20 is made of a material that expands when heated (for example, a metal material). An inner circumferential surface 20b of the holding tube 20 abuts on the outer circumferential surface 12a of the magnet 12, the outer circumferential surface 13a of the sleeve 13, and the outer circumferential surface 14a of the sleeve 14. Note that as described above, the holding tube 20 is fitted onto the outer circumferential surface of the shaft portion 10 by shrink fitting. Therefore, the inner circumferential surface 20b of the holding tube 20 tightens the outer circumferential surface 12a of the magnet 12, the outer circumferential surface 13a of the sleeve 13, and the outer circumferential surface 14a of the sleeve 14.

That is, in the holding tube 20, an inner diameter of a portion surrounding the magnet 12 is smaller than an inner diameter of a portion surrounding the sleeve 13 and an inner diameter of a portion surrounding the sleeve 14. In addition, in the holding tube 20, an outer diameter of the portion surrounding the magnet 12 is smaller than an outer diameter of the portion surrounding the sleeve 13 and an outer diameter of the portion surrounding the sleeve 14. The holding tube 20 is integrally rotatable with the shaft portion 10 by tightening the outer circumferential surface (the outer circumferential surface 12a of the magnet 12 and the outer circumferential surfaces 13a and 14a of the sleeves 13 and 14) of the shaft portion 10.

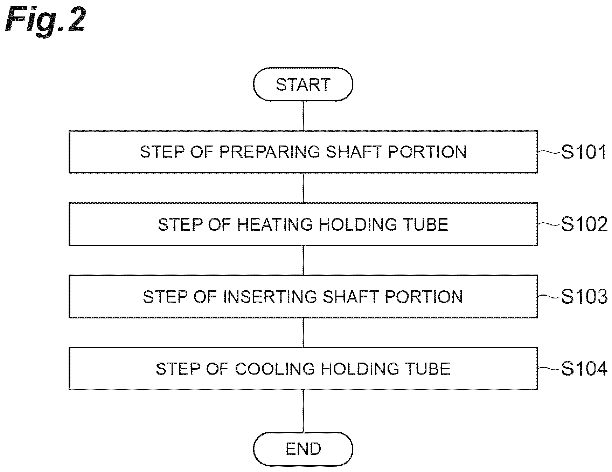

Next, a method for manufacturing the motor rotor 1 will be described with reference to a flowchart of FIG. 2. This manufacturing method includes the following steps. As illustrated in FIG. 2, when the motor rotor 1 is manufactured, the shaft portion 10 is first prepared (S101: step of preparing the shaft portion). As described above, the shaft portion 10 prepared in this step is the shaft portion 10 including the magnet 12 and the sleeves 13 and 14 provided adjacent to the magnet 12 in the extending direction of the shaft portion 10 and having an outer diameter larger than the outer diameter of the magnet 12.

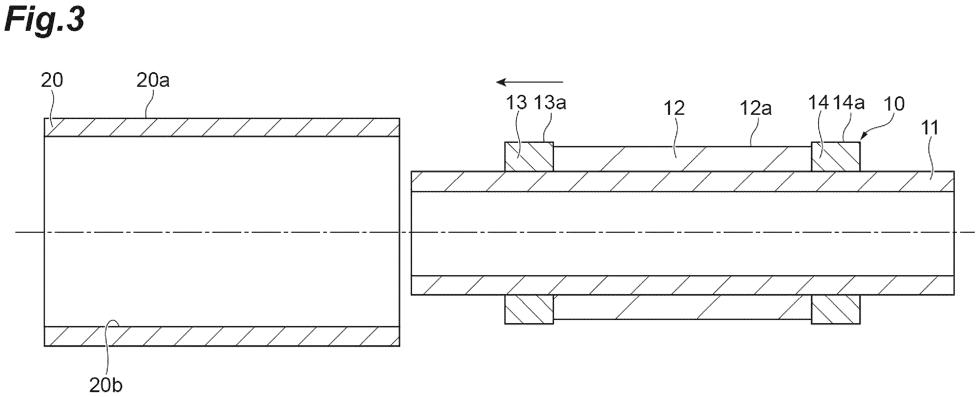

Next, the holding tube 20 is heated to increase the inner diameter of the holding tube 20 as compared with the inner diameter before heating (S102: step of heating the holding tube to increase the inner diameter). Then, as illustrated in FIG. 3, the shaft portion 10 is inserted into the heated holding tube 20 such that the outer circumferential surface 12a of the magnet 12, the outer circumferential surface 13a of the sleeve 13, and the outer circumferential surface 14a of the sleeve 14 face the inner circumferential surface 20b of the holding tube 20 (S103: step of inserting the shaft portion).

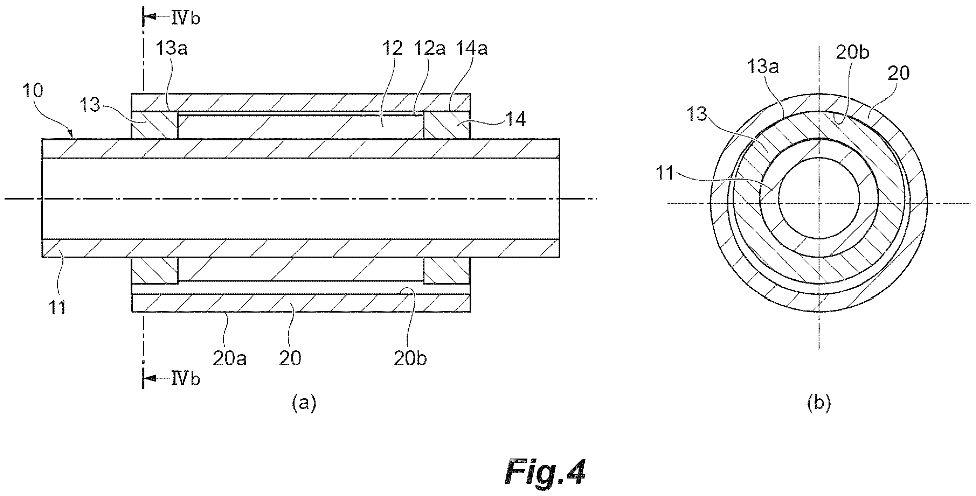

Here, when and after the shaft portion 10 is inserted into the heated holding tube 20, it may be difficult to match the axial center of the holding tube 20 with the axial center of the shaft portion 10. When the axial centers are shifted from each other, the outer circumferential surface of the shaft portion 10 abuts on the inner circumferential surface 20b of the holding tube 20 in a high-temperature state. However, in the present embodiment, the outer diameters of the sleeves 13 and 14 are larger than the outer diameter of the magnet 12. Therefore, as illustrated in FIGS. 4(a) and 4(b), the outer circumferential surface 13a of the sleeve 13 and the outer circumferential surface 14a of the sleeve 14 come into line contact with the inner circumferential surface 20b of the holding tube 20. That is, the outer circumferential surface 12a of the magnet 12 does not abut on the inner circumferential surface 20b of the holding tube 20. As a result, it is possible to suppress direct abutting of the holding tube 20 in the high-temperature state on the magnet 12.

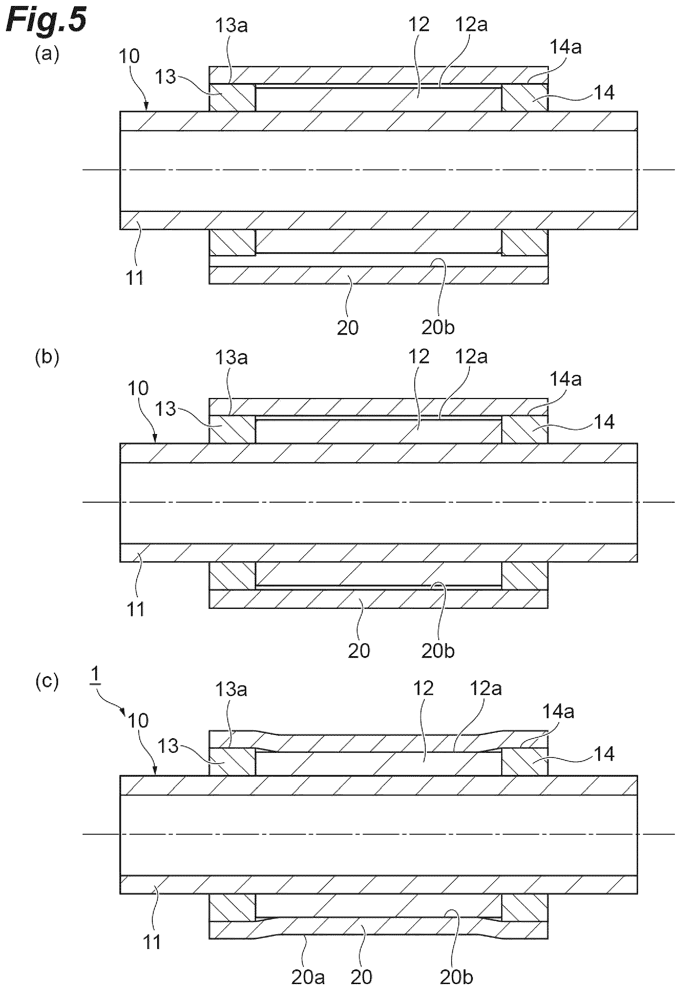

Next, as illustrated in FIGS. 5(a) and 5(b), the diameter (inner diameter and outer diameter) of the holding tube 20 is reduced by cooling the holding tube 20 in a state where the shaft portion 10 is inserted into the holding tube 20. Then, as illustrated in FIG. 5(c), the inner circumferential surface 20b of the holding tube 20 is caused to abut on the outer circumferential surface 12a of the magnet 12, the outer circumferential surface 13a of the sleeve 13, and the outer circumferential surface 14a of the sleeve 14 (S104: step of cooling the holding tube to cause the inner circumferential surface of the holding tube to abut on the outer circumferential surfaces of the magnet and the sleeves).

Here, details of the abutting state of the holding tube 20 when the diameter of the holding tube 20 is reduced in S104 will be described. As illustrated in FIG. 5 (b), when the holding tube 20 is cooled, the diameter of the holding tube 20 decreases, so that the inner circumferential surface 20b of the holding tube 20 first abuts on the outer circumferential surface 13a of the sleeve 13 and the outer circumferential surface 14a of the sleeve 14. At this time, the sleeves 13 and 14 and the holding tube 20 are aligned with each other. Then, the holding tube 20 and the sleeves 13 and 14 are fitted to each other. That is, in this state, the magnet 12 and the holding tube 20 in the high-temperature state do not abut on each other.

When the holding tube 20 is further cooled, the diameter of a portion of the holding tube 20 facing the outer circumferential surface 12a of the magnet 12 is further reduced. As a result, as illustrated in FIG. 5(c), the inner circumferential surface 20b of the holding tube 20 also abuts on the outer circumferential surface 12a of the magnet 12. That is, the holding tube 20 abuts on the magnet 12 in a state where the temperature of the holding tube 20 at the end of the cooling step of the holding tube 20 is lowered. At this time, since the shaft portion 10 and the holding tube 20 are aligned, the inner circumferential surface 20b of the holding tube 20 can uniformly abut on the entire outer circumferential surface 12a of the magnet 12. As a result, the holding tube 20, the magnet 12, the sleeve 13, and the sleeve 14 are fitted to each other, and the holding tube 20 is fitted to the shaft portion 10. In this manner, the holding tube 20 is shrink fitted onto the outer circumferential surface of the shaft portion 10.

As described above, in the motor rotor 1 and the method for manufacturing the motor rotor, the shaft portion 10 in which the outer diameters of the sleeves 13 and 14 are larger than the outer diameter of the magnet 12 is used. Therefore, when the shaft portion 10 is inserted inside the holding tube 20 in order to attach the holding tube 20 by shrink fitting, it is possible to suppress direct abutting of the inner circumferential surface 20b of the holding tube 20 on the magnet 12. As a result, it is possible to suppress direct abutting of the holding tube 20 in the high-temperature state on the magnet 12 in the initial stage of the cooling step of the holding tube 20 in shrink fitting. Therefore, the motor rotor 1 can suppress local demagnetization of the magnet 12 of the shaft portion 10 when the holding tube 20 is attached to the shaft portion 10 by shrink fitting.

The shaft portion 10 includes the shaft 11 having a rod shape, the magnet 12 provided around the shaft 11, and the sleeves 13 and 14. In this case, even when the holding tube 20 is attached by shrink fitting to the shaft portion 10 having such a configuration, the motor rotor 1 can suppress local demagnetization of the magnet 12.

In a state where the holding tube 20 is shrink fitted, the outer diameters of the portions surrounding the sleeves 13 and 14 in the holding tube 20 are larger than the outer diameter of the portion surrounding the magnet 12. That is, the outer circumferential surface 20a of the holding tube 20 has a shape along the outer diameters of the magnet 12 and the sleeves 13 and 14. As a result, the motor rotor 1 can sufficiently pressurize not only the sleeves 13 and 14 but also the portion of the magnet 12 smaller than the outer diameters of the sleeves 13 and 14 with the holding tube 20 to hold the magnet 12.

Note that the magnet 12 described above is not limited to one lump of magnet, and may include a plurality of magnet bodies. For example, the magnet 12 may include a plurality of magnet bodies arranged side by side along a circumferential direction of the shaft 11. Alternatively, the magnet 12 may include a plurality of magnet bodies arranged side by side along the extending direction of the shaft 11. In this case, the magnet 12 including the plurality of magnet bodies can be used in the motor rotor 1, and restrictions on the shape of the magnet 12 can be suppressed.

In addition, the sleeves 13 and 14 described above may be formed integrally with the shaft 11. In this case, in the motor rotor 1, the number of components can be reduced. In addition, in the motor rotor 1, a step of attaching the sleeves 13 and 14 to the shaft 11 can be omitted.

### (Second Embodiment)

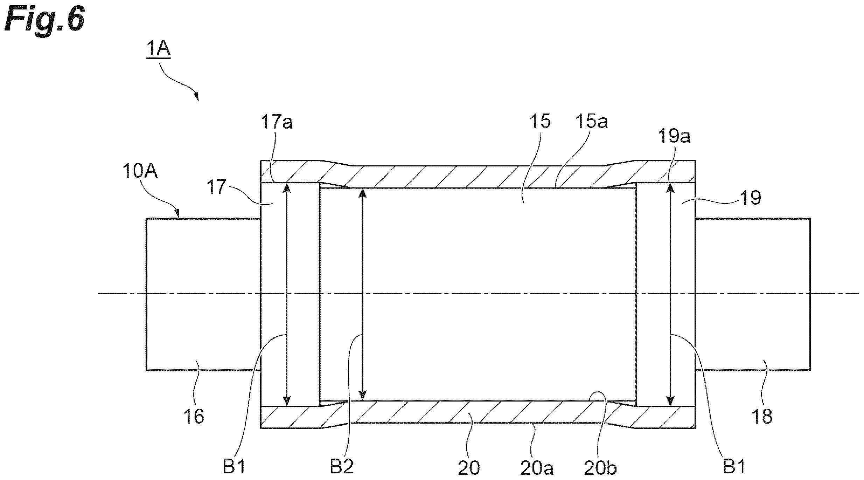

Next, a second embodiment of a motor rotor will be described. As illustrated in FIG. 6, a motor rotor 1A according to the second embodiment includes a shaft portion 10A having a different configuration instead of the shaft portion 10 according to the first embodiment. A holding tube 20 is attached to an outer circumferential surface (an outer circumferential surface 15a of a magnet 15 and outer circumferential surfaces 17a and 19a of large-diameter portions 17 and 19) of the shaft portion 10A by shrink fitting.

The shaft portion 10A includes the magnet 15, a shaft 16, the large-diameter portion 17, a shaft 18, and the large-diameter portion 19. The magnet 15 has a columnar shape. That is, the magnet 15 is a solid magnet unlike the magnet 12 of the first embodiment. The shafts 16 and 18 each have a rod shape. In the present embodiment, the shafts 16 and 18 have a columnar shape. The large-diameter portions 17 and 19 have a columnar shape (a columnar shape having a short length in an extending direction of the shaft portion 10A).

The large-diameter portion 17, the magnet 15, the large-diameter portion 19, and the shaft 18 are disposed so as to be coaxial with the shaft 16. That is, the shaft 16, the large-diameter portion 17, the magnet 15, the large-diameter portion 19, and the shaft 18 are disposed coaxially with each other. In addition, the shaft 16, the large-diameter portion 17, the magnet 15, the large-diameter portion 19, and the shaft 18 are connected (attached) to each other in this arrangement order.

The large-diameter portions 17 and 19 are provided adjacent to the magnet 15 in the extending direction of the shaft portion 10A. In the present embodiment, the large-diameter portion 17 is disposed on one end side of the magnet 15 in the extending direction of the shaft portion 10A. The large-diameter portion 19 is disposed on the other end side of the magnet 15 in the extending direction of the shaft portion 10A.

An outer diameter B1 of the large-diameter portion 17 is larger than an outer diameter B2 of the magnet 15. The large-diameter portion 19 has the same shape as the large-diameter portion 17. Therefore, an outer diameter B1 of the large-diameter portion 19 is larger than the outer diameter B2 of the magnet 15. Here, the size relationship in outer diameter between the large-diameter portions 17 and 19 and the magnet 15 is satisfied when the motor rotor 1A is in a normal room temperature state. This normal room temperature state can be said to be a state in which a motor on which the motor rotor 1A is mounted is in a non-operating state and there is no temperature rise due to the operation. In addition, the normal room temperature state can be said to be a temperature state of the outside air temperature under the use environment of the motor on which the motor rotor 1A is mounted.

The holding tube 20 has a cylindrical shape. The holding tube 20 is made of a material that expands when heated (for example, a metal material). An inner circumferential surface 20b of the holding tube 20 abuts on the outer circumferential surface 15a of the magnet 15, the outer circumferential surface 17a of the large-diameter portion 17, and the outer circumferential surface 19a of the large-diameter portion 19. Note that as described above, the holding tube 20 is fitted onto the outer circumferential surface of the shaft portion 10A by shrink fitting. Therefore, the inner circumferential surface 20b of the holding tube 20 tightens the outer circumferential surface 15a of the magnet 15, the outer circumferential surface 17a of the large-diameter portion 17, and the outer circumferential surface 19a of the large-diameter portion 19.

That is, in the holding tube 20, an inner diameter of a portion surrounding the magnet 15 is smaller than an inner diameter of a portion surrounding the large-diameter portion 17 and an inner diameter of a portion surrounding the large-diameter portion 19. In addition, in the holding tube 20, an outer diameter of the portion surrounding the magnet 15 is smaller than an outer diameter of the portion surrounding the large-diameter portion 17 and an outer diameter of the portion surrounding the large-diameter portion 19. The holding tube 20 is integrally rotatable with the shaft portion 10A by tightening the outer circumferential surface (the outer circumferential surface 15a of the magnet 15 and the outer circumferential surfaces 17a and 19a of the large-diameter portions 17 and 19) of the shaft portion 10A.

Next, a method for manufacturing the motor rotor 1A will be described with reference to the flowchart of FIG. 2. This manufacturing method includes the following steps. As illustrated in FIG. 2, when the motor rotor 1A is manufactured, the shaft portion 10A is first prepared (S101: step of preparing the shaft portion). As described above, the shaft portion 10A prepared in this step is the shaft portion 10A including the magnet 15 and the large-diameter portions 17 and 19 provided adjacent to the magnet 15 in the extending direction of the shaft portion 10A and having an outer diameter larger than the outer diameter of the magnet 15.

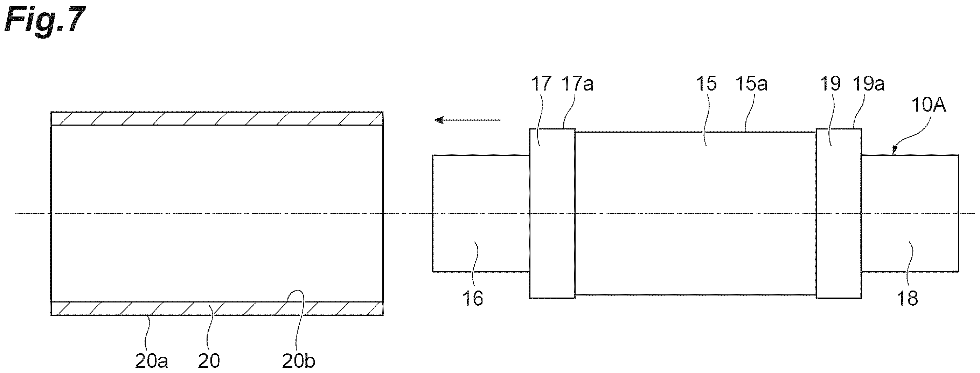

Next, the holding tube 20 is heated to increase the inner diameter of the holding tube 20 as compared with the inner diameter before heating (S102: step of heating the holding tube to increase the inner diameter). Then, as illustrated in FIG. 7, the shaft portion 10A is inserted into the heated holding tube 20 such that the outer circumferential surface 15a of the magnet 15, the outer circumferential surface 17a of the large-diameter portion 17, and the outer circumferential surface 19a of the large-diameter portion 19 face the inner circumferential surface 20b of the holding tube 20 (S103: step of inserting the shaft portion). Similarly to the motor rotor 1 according to the first embodiment, also in the present embodiment, when and after the shaft portion 10A is inserted into the heated holding tube 20, direct abutting of the holding tube 20 in a high-temperature state on the magnet 15 is suppressed.

Next, the diameter (inner diameter and outer diameter) of the holding tube 20 is reduced by cooling the holding tube 20 in a state where the shaft portion 10A is inserted into the holding tube 20. Then, as illustrated in FIG. 6, the inner circumferential surface 20b of the holding tube 20 is caused to abut on the outer circumferential surface 15a of the magnet 15, the outer circumferential surface 17a of the large-diameter portion 17, and the outer circumferential surface 19a of the large-diameter portion 19 (S104: step of cooling the holding tube to cause the inner circumferential surface of the holding tube to abut on the outer circumferential surfaces of the magnet and the large-diameter portions).

In step S104, alignment of the shaft portion 10A with the holding tube 20 is performed as in the first embodiment. In addition, in the initial stage of the cooling step of the holding tube 20, the magnet 15 and the holding tube 20 in the high-temperature state do not abut on each other. The holding tube 20 abuts on the magnet 15 in a state where the temperature of the holding tube 20 at the end of the cooling step of the holding tube 20 is lowered.

As described above, in the motor rotor 1A and the method for manufacturing the motor rotor, the shaft portion 10A in which the outer diameters of the large-diameter portions 17 and 19 are larger than the outer diameter of the magnet 15 is used. Therefore, when the shaft portion 10A is inserted inside the holding tube 20 in order to attach the holding tube 20 by shrink fitting, it is possible to suppress abutting of the inner circumferential surface 20b of the holding tube 20 on the magnet 15. As a result, it is possible to suppress direct abutting of the holding tube 20 in the high-temperature state on the magnet 15 in the initial stage of the cooling step of the holding tube 20 in shrink fitting. Therefore, the motor rotor 1A can suppress local demagnetization of the magnet 15 of the shaft portion 10A when the holding tube 20 is attached to the shaft portion 10A by shrink fitting.

In the shaft portion 10A, the shaft 16, the large-diameter portion 17, the magnet 15, the large-diameter portion 19, and the shaft 18 are disposed coaxially with each other and connected to each other. In addition, the magnet 15 is a solid magnet. In this case, even when the holding tube 20 is attached by shrink fitting to the shaft portion 10A having such a configuration, the motor rotor 1A can suppress local demagnetization of the magnet 15.

Note that the large-diameter portion 17 may be formed integrally with the shaft 16. Similarly, the large-diameter portion 19 may be formed integrally with the shaft 18. In this case, in the motor rotor 1A, the number of components can be reduced. In addition, in the motor rotor 1A, a step of attaching the large-diameter portion 17 to the shaft 16 and a step of attaching the large-diameter portion 19 to the shaft 18 can be omitted.

Although various embodiments of the present disclosure have been described above, the present disclosure is not limited to the above embodiments. For example, the shaft portion 10 according to the first embodiment may be configured to include only one of the sleeves 13 and 14. Similarly, the shaft portion 10A according to the second embodiment may be configured to include only one of the large-diameter portions 17 and 19. Even in these cases, the shaft portions 10 and 10A can suppress local demagnetization of the magnets 12 and 15 when the holding tube 20 is attached by shrink fitting.

Note that even when a difference between the outer diameters of the sleeves (large-diameter portions) 13 and 14 and the outer diameter of the magnet 12 in the first embodiment and a difference between the outer diameters of the large-diameter portions 17 and 19 and the outer diameter of the magnet 15 in the second embodiment are small, an effect capable of suppressing local demagnetization of the magnets 12 and 15 described above is provided. Here, as an example, an analysis result of a temperature change of the surface (outer circumferential surface 12a) of the magnet 12 in a case where the motor rotor 1 of the first embodiment is used and the heated holding tube 20 is attached to the shaft portion 10 will be described.

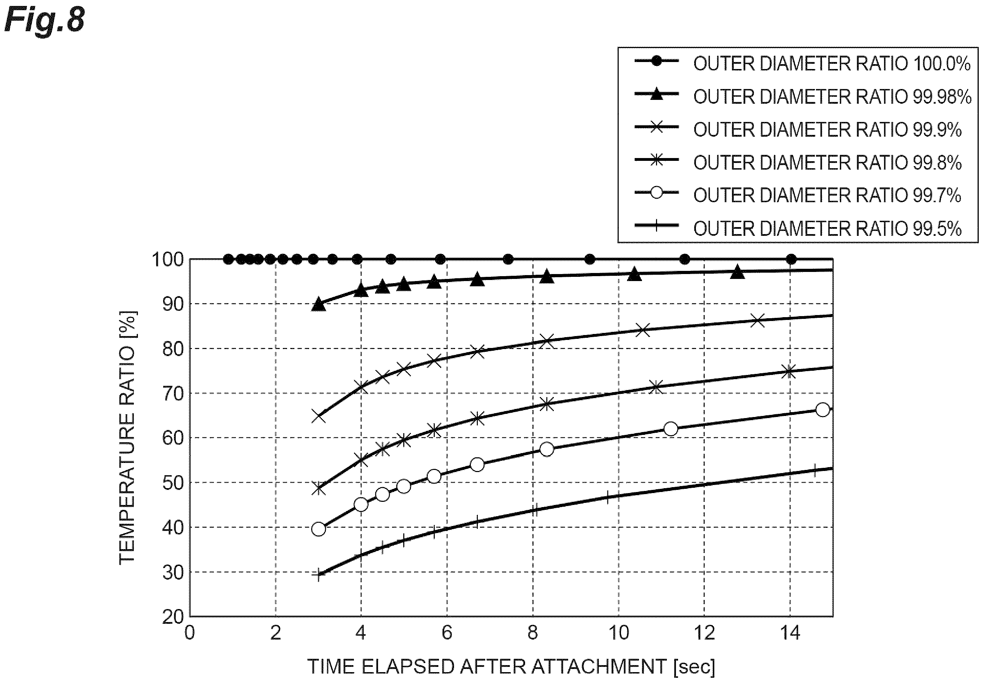

FIG. 8 illustrates temperature changes of the surface of the magnet 12 due to a difference in the ratio (outer diameter ratio) of the outer diameter of the magnet 12 to the outer diameters of the sleeves 13 and 14. Here, the outer diameter ratio means that as the outer diameter ratio decreases, the outer diameter of the magnet 12 decreases with respect to the outer diameters of the sleeves 13 and 14. In addition, in FIG. 8, the temperature of the surface of the magnet 12 at each outer diameter ratio is illustrated using a temperature ratio in a case where the temperature at an outer diameter ratio of 100.0% is 100% and the temperature at 0°C is 0%. Note that when the outer diameter ratio is 100.0%, the temperature of the surface of the magnet 12 reaches the surface temperature of the holding tube 20 almost simultaneously with the attachment of the holding tube 20.

As illustrated in FIG. 8, in the case of an outer diameter ratio of 99.98%, the temperature ratio was about 90% immediately after attaching the holding tube 20, and increased to about 95% or more after a lapse of several seconds. On the other hand, when the outer diameter ratios were 99.9%, 99.8%, 99.7%, and 99.5%, the temperature ratio was less than about 65% immediately after attachment of the holding tube 20, the temperature ratio was less than 80% even upon a lapse of several seconds, and the temperature ratio was less than 90% even upon a lapse of 15 seconds.

That is, it has been confirmed that when the outer diameter ratio is 99.9% or less, particularly 99.5% or more and 99.9% or less, the temperature rise of the magnet 12 can be greatly suppressed, and local demagnetization of the magnet 12 of the shaft portion 10 can be suppressed. Note that it is obvious that even when the outer diameter ratio is less than 99.5%, local demagnetization of the magnet 12 of the shaft portion 10 can be similarly suppressed. In addition, in the above description, the temperature change was analyzed using the motor rotor 1 according to the first embodiment, but it is obvious that local demagnetization of the magnet 15 of the shaft portion 10A can be suppressed with the same configuration (outer diameter ratio) also in the motor rotor 1A according to the second embodiment.

The present disclosure includes the following configurations.

A motor rotor of the present disclosure is
[1] "A motor rotor including: a shaft portion having a magnet; and a holding tube fitted onto an outer circumferential surface of the shaft portion, in which
   the shaft portion includes
   the magnet, and
   a large-diameter portion provided adjacent to the magnet in an extending direction of the shaft portion and having an outer diameter larger than an outer diameter of the magnet, and
   an inner circumferential surface of the holding tube abuts on an outer circumferential surface of the magnet and an outer circumferential surface of the large-diameter portion.".

The motor rotor of the present disclosure may be
"The motor rotor according to [1], in which
the shaft portion further includes a shaft having a rod shape,
the large-diameter portion has a tubular shape and is attached to the shaft such that the shaft passes through the large-diameter portion,
the magnet has a tubular shape, and the shaft passes through the magnet.".

The motor rotor of the present disclosure may be
"The motor rotor according to [2], in which the magnet includes a plurality of magnet bodies arranged side by side along a circumferential direction of the shaft or a plurality of magnet bodies arranged side by side along an extending direction of the shaft.".

The motor rotor of the present disclosure may be
"The motor rotor according to [1], in which
the shaft portion further includes a shaft having a rod shape,
the large-diameter portion has a columnar shape and is attached to the shaft so as to be coaxial with the shaft, and
the magnet has a columnar shape and is disposed coaxially with the shaft.".

The motor rotor of the present disclosure may be
"The motor rotor according to any one of [1] to [4], in which the shaft and the large-diameter portion are integrally formed.".

The motor rotor of the present disclosure may be
"The motor rotor according to any one of [1] to [5], in which an outer diameter of a portion surrounding the large-diameter portion in the holding tube is larger than an outer diameter of a portion surrounding the magnet in the holding tube.".

A method for manufacturing a motor rotor of the present disclosure is
"A method for manufacturing a motor rotor including a shaft portion and a holding tube, the shaft portion having a magnet, the holding tube being shrink fitted onto an outer circumferential surface of the shaft portion, the method comprising:
a step of preparing the shaft portion including the magnet and a large-diameter portion provided adjacent to the magnet in an extending direction of the shaft portion and having an outer diameter larger than an outer diameter of the magnet;
a step of heating the holding tube to increase an inner diameter of the holding tube as compared with the inner diameter before heating;
a step of inserting the shaft portion into the heated holding tube such that an outer circumferential surface of the large-diameter portion and an outer circumferential surface of the magnet face an inner circumferential surface of the holding tube; and
a step of reducing the holding tube by cooling the holding tube while the shaft portion is inserted into the holding tube, thereby causing the inner circumferential surface of the holding tube to abut on the outer circumferential surface of the large-diameter portion and the outer circumferential surface of the magnet.".

### Reference Signs List

1, 1A Motor rotor
10, 10A Shaft portion
11, 16, 18 Shaft
12, 15 Magnet
12a, 15a Outer circumferential surface (outer circumferential surface of magnet and outer circumferential surface of shaft portion)
13, 14 Sleeve (large-diameter portion)
13a, 14a Outer circumferential surface (outer circumferential surface of large-diameter portion and outer circumferential surface of shaft portion)
17, 19 Large-diameter portion
17a, 19a Outer circumferential surface (outer circumferential surface of large-diameter portion and outer circumferential surface of shaft portion)
20 Holding tube
20b Inner circumferential surface (inner circumferential surface of holding tube)

## Claims

1. A motor rotor comprising: a shaft portion having a magnet; and a holding tube fitted onto an outer circumferential surface of the shaft portion, wherein
the shaft portion includes
the magnet, and
a large-diameter portion provided adjacent to the magnet in an extending direction of the shaft portion and having an outer diameter larger than an outer diameter of the magnet, and
an inner circumferential surface of the holding tube abuts on an outer circumferential surface of the magnet and an outer circumferential surface of the large-diameter portion.

2. The motor rotor according to claim 1, wherein
the shaft portion further includes a shaft having a rod shape,
the large-diameter portion has a tubular shape and is attached to the shaft such that the shaft passes through the large-diameter portion,
the magnet has a tubular shape, and the shaft passes through the magnet.

3. The motor rotor according to claim 2, wherein the magnet includes a plurality of magnet bodies arranged side by side along a circumferential direction of the shaft or a plurality of magnet bodies arranged side by side along an extending direction of the shaft.

4. The motor rotor according to claim 1, wherein
the shaft portion further includes a shaft having a rod shape,
the large-diameter portion has a columnar shape and is attached to the shaft so as to be coaxial with the shaft, and
the magnet has a columnar shape and is disposed coaxially with the shaft.

5. The motor rotor according to any one of claims 1 to 4, wherein the shaft and the large-diameter portion are integrally formed.

6. The motor rotor according to any one of claims 1 to 4, wherein an outer diameter of a portion surrounding the large-diameter portion in the holding tube is larger than an outer diameter of a portion surrounding the magnet in the holding tube.

7. A method for manufacturing a motor rotor including a shaft portion and a holding tube, the shaft portion having a magnet, the holding tube being shrink fitted onto an outer circumferential surface of the shaft portion, the method comprising:
a step of preparing the shaft portion including the magnet and a large-diameter portion provided adjacent to the magnet in an extending direction of the shaft portion and having an outer diameter larger than an outer diameter of the magnet;
a step of heating the holding tube to increase an inner diameter of the holding tube as compared with the inner diameter before heating;
a step of inserting the shaft portion into the heated holding tube such that an outer circumferential surface of the large-diameter portion and an outer circumferential surface of the magnet face an inner circumferential surface of the holding tube; and
a step of reducing the holding tube by cooling the holding tube while the shaft portion is inserted into the holding tube, thereby causing the inner circumferential surface of the holding tube to abut on the outer circumferential surface of the large-diameter portion and the outer circumferential surface of the magnet.
